# Europäisches Patentamt
# European Patent Office
# Office européen des brevets

(19)

(11) Numéro de publication : **0 339 069 B1**

## (12) FASCICULE DE BREVET EUROPEEN

(45) Date de publication du fascicule du brevet :
**18.03.92 Bulletin 92/12**

(51) Int. Cl.$^5$ : **G11B 5/23, G11B 5/187**

(21) Numéro de dépôt : **88909535.2**

(22) Date de dépôt : **21.10.88**

(86) Numéro de dépôt international :
**PCT/FR88/00518**

(87) Numéro de publication internationale :
**WO 89/04038 05.05.89 Gazette 89/10**

(54) **PROCEDE DE DETECTION DE FIN DE POLISSAGE D'UNE TETE MAGNETIQUE COUCHES MINCES.**

(30) Priorité : **27.10.87 FR 8714821**

(43) Date de publication de la demande :
**02.11.89 Bulletin 89/44**

(45) Mention de la délivrance du brevet :
**18.03.92 Bulletin 92/12**

(84) Etats contractants désignés :
**BE DE FR GB IT NL**

(56) Documents cités :
**GB-A- 2 115 211**
**US-A- 3 495 049**
**US-A- 3 938 193**
**Patent Abstracts of Japan, vol. 10, No. 312
(P-509)(2368), 23 October 1986, & JP-A-61 122
909**

(72) Inventeur : **ROLLAND, Jean-Luc**
**23,Place Bossuet**
**F-21000 Dijon (FR)**
Inventeur : **BEGUIN, Jean-Yves**
**122, rue de la Tombe-Issoire**
**F-75014 Paris (FR)**
Inventeur : **MAGNA, Henriette**
**52, rue des Chênes**
**F-92160 Antony (FR)**
Inventeur : **JACOBELLI, Alain**
**32, rue Corot**
**F-91240 S.-Michel-sur-Orge (FR)**
Inventeur : **PENOT, Maurice**
**12, rue de la Vauve**
**F-91120 Palaiseau (FR)**

(74) Mandataire : **Guérin, Michel**
**THOMSON-CSF SCPI**
**F-92045 PARIS LA DEFENSE CEDEX 67 (FR)**

(73) Titulaire : **COMPAGNIE EUROPEENNE DE
COMPOSANTS ELECTRONIQUES LCC**
**50, rue Jean-Pierre Timbaud**
**F-92400 Courbevoie (FR)**

EP 0 339 069 B1

Jouve, 18, rue Saint-Denis, 75001 PARIS

# Description

La présente invention concerne un procédé de détection de fin de polissage d'une tête magnétique réalisée selon les techniques dites de couches minces.

Les têtes magnétiques couches minces sont réalisées par dépôts successifs de matériaux magnétiques, diélectriques et conducteurs. Ces couches subissent des opérations finales de gravure et de polissage des pôles magnétiques.

La profondeur de l'entrefer est une caractéristique géométrique dont le contrôle est fondamental pour les têtes magnétiques et spécialement pour celles faisant appel à des technologies de dépôt et de gravure de couches minces. En effet, si dans une tête magnétique massive (tête audio ou VHS par exemple) ou dans une tête du type comportant de chaque côté de l'entrefer un alliage métallique magnétique (dite encore à alliage métallique magnétique dans l'entrefer), l'efficacité varie peu avec la profondeur de l'entrefer (typiquement 0,05 dB/$\mu$), il en va autrement des têtes utilisant des technologies couches minces (typiquement autour de 0,2 dB/$\mu$). Dans ce dernier cas, un contrôle très précis de cette cote lors de la réalisation de la tête s'avère nécessaire. De plus, les valeurs de la profondeur de l'entrefer sont très différentes suivant la filière technologique employée : de l'ordre de 20 à 40$\mu$ pour une tête massive et de l'ordre de 2 à 10$\mu$ pour une tête en couches minces. Cette faible profondeur entraîne pour les têtes en couches minces une très nette diminution de la section de l'entrefer et donc une diminution du bruit thermique lié à la partie réelle de l'impédance de la tête. En effet, le bruit thermique est proportionnel à la section de l'entrefer.

Il est donc très important de pouvoir contrôler de façon précise, fiable et répétitive la profondeur de l'entrefer lors de l'étape de finition de la face active de la tête. Afin de parvenir à ce résultat, de nombreuses méthodes sont actuellement employées par l'homme de l'art. On peut, au cours de l'étape de polissage, mesurer l'impédance de la tête pour l'ajuster à la valeur désirée. On peut aussi détecter l'ouverture du circuit magnétique de la tête par mesure de l'inductance aux bornes du bobinage. Il existe encore des méthodes optiques de contrôle de la profondeur de l'entrefer. Toutes ces méthodes sont en général bien maîtrisées mais elles présentent des inconvénients importants : leur mise en oeuvre est difficile et les valeurs mesurées évoluent continûment pendant la mise à la cote de la profondeur de l'entrefer. La précision obtenue est relativement faible : de l'ordre de 0,5$\mu$ pour une profondeur d'entrefer de l'ordre de 2$\mu$.

GB-A-2 115 211 décrit un procédé de détection de la fin du polissage d'un seul pôle magnétique pour contrôler la longuer de la face définissant la profondeur de l'entrefer résultant entre deux tels pôles magnétiques après l'assemblage, la détection étant obtenue grâce à la rupture d'un circuit électrique constitué d'un canal d'un matériau conducteur indiquant la longueur désirée de cette face de l'entrefer.

US-A-3495049 décrit l'utilisation d'une couche conductrice située dans le matériau des pôles magnétiques pour indiquer une mesure d'usure maximale.

Afin de pallier ces inconvénients, l'invention propose un procédé de détection de fin de polissage par mesure de la variation d'un signal, la mise à la cote de la profondeur provoquant une variation du signal du type tout ou rien. La variation du signal intervient à l'instant précis où la cote recherchée est atteinte.

L'invention a donc pour objet un procédé de détection de fin de polissage d'au moins une tête magnétique en couches minces, la tête comprenant au stade de la mise en oeuvre dudit procédé, une face active, constituée de deux pôles magnétiques séparés par un entrefer, la détection étant obtenue grâce à la rupture d'un circuit électrique, le procédé comprenant les étapes suivantes :
– dépôt d'une couche conductrice sur l'ensemble de la face active pour constituer ledit circuit électrique,
– gravure de la face active recouverte de ladite couche conductrice,
– dépôt d'une couche de matériau diélectrique sur la face active gravée,
– polissage de la face active à partir de la face libre de la couche de matériau diélectrique jusqu'à élimination complète de la partie de la couche conductrice située au-dessus dudit entrefer, cette élimination étant détectée par la brusque variation de résistivité entre les deux pôles magnétiques.

L'invention sera mieux comprise et d'autres avantages apparaîtront à la lecture de la description qui va suivre, donnée à titre non limitatif, et grâce aux figures annexées parmi lesquelles :
– la figure 1 représente une structure simplifiée de tête planaire,
– les figures 2 à 6 représentent différentes étapes du procédé selon l'invention appliqué à la structure représentée à la figure 1.

Le procédé selon l'invention est basé sur la détection du passage conduction électrique à isolement électrique lors de l'étape du procédé de fabrication d'une tête magnétique qui vise à atteindre la profondeur d'entrefer voulue. Le procédé suppose qu'il y ait conduction électrique entre les deux pôles magnétiques avant que la profondeur souhaitée soit atteinte et isolement lorsque la cote désirée est atteinte. Ce procédé est particulièrement bien adapté aux têtes en couches minces réalisées suivant un procédé planaire. L'épaisseur de la couche magnétique formant les pôles définit la profondeur de l'entrefer.

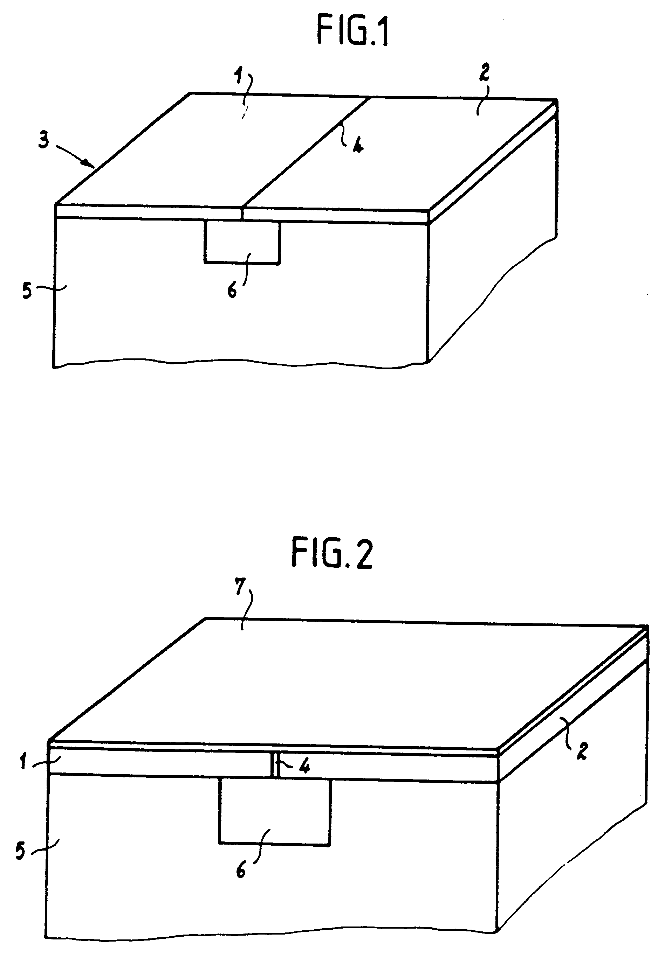

La figure 1 représente une structure simplifiée de tête planaire pour laquelle le procédé selon l'invention s'applique particulièrement bien. La face active 3 de la tête magnétique peut avoir entre 1 et 40µ d'épaisseur. Elle comprend un premier pôle magnétique 1 et un second pôle magnétique 2 séparés par un entrefer 4. La face active 3 repose sur un substrat magnétique 5 contenant un plot diélectrique 6 situé sous l'entrefer 4. Le plot diélectrique 6 constitue un deuxième entrefer par rapport au circuit magnétique formé par les parties 1, 2 et 5. L'entrefer 4 est situé à peu près au centre du plot diélectrique 6 qui peut avoir une épaisseur de l'ordre de quelques dizaines à quelques centaines de µ. Les matériaux constitutifs de cette tête magnétique sont par exemple : un alliage métallique magnétique (FeNi, FeAlSi, CoZrNb, etc.) pour les pôles magnétiques 1 et 2, un diélectrique tel que $SiO_2$ ou $Al_2O_3$ pour l'entrefer 4. Le plot diélectrique 6 peut être constitué de verre ou d'une résine époxy. Le substat magnétique 5 peut être constitué par un ferrite poly ou monocristallin de manganèse-zinc, c'est-à-dire un matériau de résistivité élevée. A titre d'exemple, les largeurs des entrefers 4 et 6 peuvent être de 0,2µ pour le premier entrefer (ou entrefer microscopique) et de 200µ pour le deuxième entrefer (ou entrefer macroscopique).

La structure planaire représentée à la figure 1 reçoit alors un dépôt de matériau conducteur sur toute la surface de la tranche. L'épaisseur de ce dépôt peut aller de quelques centaines d'angströms à quelques dizaines de µ. Ce matériau conducteur peut être une couche d'aluminium ou de chrome par exemple. La figure 2 représente la structure planaire précédente recouverte d'une couche 7 de matériau conducteur. Les matériaux magnétiques formant les pôles 1 et 2 présentant des conductivités élevées, ceux-ci sont ainsi mis en contact électrique.

Sur les figures 1 et 2, on n'a représenté qu'une seule tête magnétique mais il est bien sûr avantageux, et c'est l'une des caractéristiques de l'invention, de réaliser des structures en nombre sur tranche.

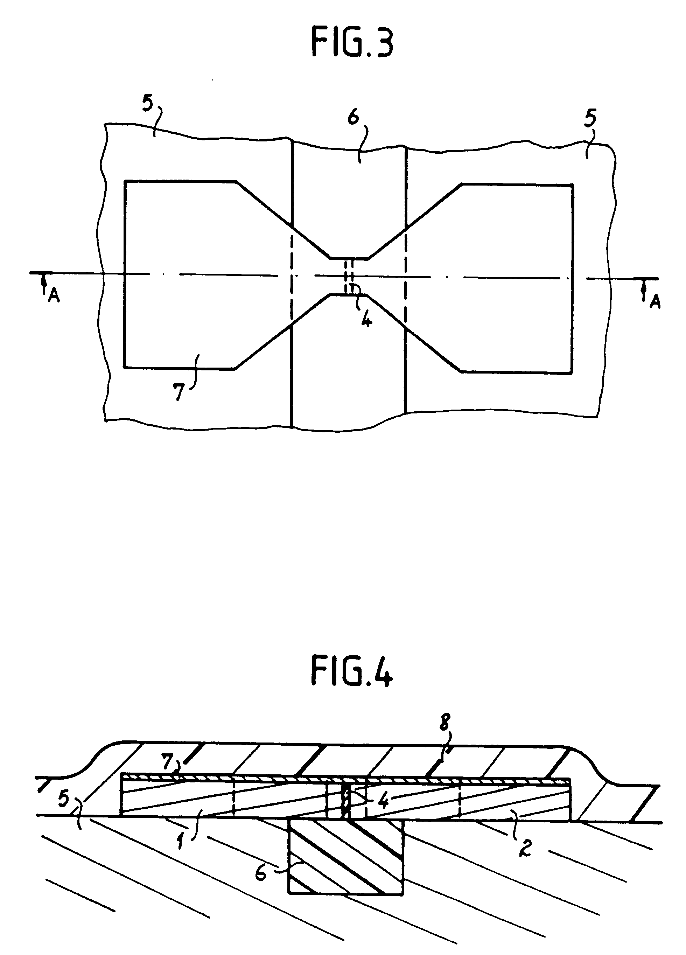

La tranche sur laquelle sont réalisées ces structures est alors gravée afin de définir la géométrie finale des pôles en regard. La figure 3 est une vue de dessus d'une telle structure.

Un matériau diélectrique (alumine, silice par exemple) est alors déposé sur toute la structure. l'épaisseur de ce dépôt est au moins égale à l'épaisseur des matériaux magnétiques constituant les pôles. La figure 4 illustre ce stade du procédé. Elle correspond à une coupe AA de la figure 3 et comporte en plus la couche 8 du matériau diélectrique.

Avant de réaliser le dépôt de la couche 8, on aura pris soin de prévoir une possibilité de connexion électrique à partir des pôles magnétiques qui présentent une faible résistivité (typiquement de l'ordre de 100 µΩ.cm). Ces connexions électriques peuvent être prévues à n'importe quel moment du procédé de réalisation des têtes magnétiques mais avant le dépôt de la couche diélectrique 8.

Suivant l'utilisation visée pour ces têtes et la méthode de polissage utilisée, toutes les têtes ou seulement un nombre restreint d'entre elles judicieusement réparties sur la tranche traitée peuvent être munies de ces connexions.

Par souci de clarté, la suite de la description ne traitera que de la finition d'une seule tête, c'est-à-dire de son opération de polissage cylindrique pour atteindre la cote de l'entrefer. Cette tête est équipée de plots de connexion reliés à chaque pôle. La résistance mesurée entre les pôles à ce stade du procédé est donc très faible.

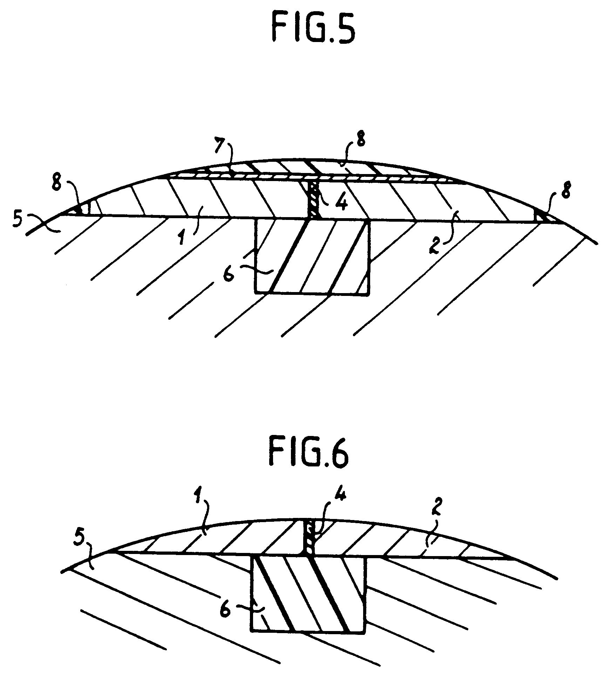

La tête subit alors l'opération de polissage cylindrique final comme le montre la figure 5. Ce polissage est effectué symétriquement par rapport à l'entrefer. La couche diélectrique 8 prend petit à petit un profil cylindrique et les pôles magnétiques 1 et 2 sont eux aussi entamés à leurs extrémités opposés à l'entrefer 4. La résistivité entre les pôles ne varie que très peu lors de ce polissage jusqu'à ce que la partie de la couche conductrice 7 située au-dessus de l'entrefer soit à son tour enlevée comme le montre la figure 6. A ce moment, la résistivité entre les deux pôles devient brusquement très grande et la polissage est arrêté, la cote de consigne étant atteinte. La détection du changement brutal de résistivité peut se faire par tout moyen connu de l'homme de l'art. Un simple ohmmètre suffit.

Le procédé décrit ici pour une tête isolée en polissage cylindrique est adaptable à des polissages plans. Il peut être utilisé, pour la mise à la cote de la profondeur de l'entrefer, pour plusieurs têtes en tant que traitement collectif. Celles-ci se présentant alors soit en barrettes, soit encore avec la tranche entière. Dans ces traitements collectifs, seules quelques têtes judicieusement choisies verront leur résistance entre les pôles mesurée.

Le procédé selon l'invention est un moyen de détection très simple de la cote de consigne à atteindre. C'est un procédé fonctionnant en tout ou rien, ce qui rend la détection de cette cote des plus aisées même avec des moyens rudimentaires. La mise en oeuvre du procédé selon l'invention ne nécessite qu'une étape supplémentaire de dépôt lors du procédé de réalisation des têtes. La prise de contacts électriques sur les pôles dépend du type de géométrie finale visée pour les têtes. La détection étant très simple, la présence d'un opérateur évaluant l'avance et la descente vers la cote de consigne et prenant la décision d'arrêter la machine n'est plus indispensable. Le procédé peut être très facilement automatisé.

La couche diélectrique 8 subsiste à certains endroits et en particulier dans les parties gravées des pôles magnétiques, de chaque côté de l'entrefer 4, ce qui évitera de détériorer le support magnétique de lecture ou d'écriture.

## Revendications

1. Procédé de détection de fin de polissage d'au moins une tête magnétique en couches minces, la tête comprenant au stade de la mise en oeuvre dudit procédé, une face active (3) constituée de deux pôles magnétiques (1,2) séparés par un entrefer (4), la détection étant obtenue grâce à la rupture d'un circuit électrique, le procédé comprenant les étapes suivantes :
   – dépôt d'une couche conductrice (7) sur l'ensemble de la face active (3) pour constituer ledit circuit électrique,
   – gravure de la face active recouverte de ladite couche conductrice,
   – dépôt d'une couche de matériau diélectrique (8) sur la face active gravée,
   – polissage de la face active à partir de la face libre de la couche de matériau diélectrique (8) jusqu'à élimination complète de la partie de la couche conductrice (7) située au-dessus dudit entrefer (4), cette élimination étant détectée par la brusque variation de résistivité entre les deux pôles magnétiques (1,2).

2. Procédé selon la revendication 1, dans lequel le polissage est du type cylindrique.

3. Procédé selon la revendication 1, dans lequel le polissage est du type plan.

4. Procédé selon la revendication 2, dans lequel le polissage de la face active est réalisée symétriquement par rapport audit entrefer (4).

5. Procédé selon l'une quelconque des revendications 1 à 4, dans lequel l'épaisseur de la couche de matériau diélectrique (8) est au moins égale à l'épaisseur des pôles magnétiques (1,2).

6. Procédé selon l'une quelconque des revendications 1 à 5, dans lequel ladite couche conductrice (7) est constituée d'aluminium ou de chrome.

7. Procédé selon l'une quelconque des revendications 1 à 6, dans lequel ladite couche de matériau diélectrique (8) est constituée d'alumine ou de silice.

## Patentansprüche

1. Verfahren zur Erfassung des Endes des Poliervorgangs wenigstens eines Magnetkopfes aus dünnen Schichten, wobei der Kopf in dem Stadium, in dem das Verfahren ausgeführt wird, eine aktive Seite (3) aufweist, die aus zwei durch einen Eisenspalt (4) getrennten Magnetpolen (1, 2) gebildet wird, wobei die Erfassung aufgrund der Unterbrechung einer elektrischen Schaltung erzielt wird und wobei das Verfahren die folgenden Schritte umfaßt:
   – Abscheiden einer leitenden Schicht (7) auf der die aktive Seite (3) bildenden Gesamtheit, um die elektrische Schaltung auszubilden,
   – Gravieren der von der leitenden Schicht abgedeckten aktiven Seite,
   – Abscheiden einer Schicht aus dielektrischem Material (8) auf der gravierten aktiven Seite,
   – Polieren der aktiven Seite, ausgehend von der freiliegenden Seite der Schicht aus dielektrischem Material (8), bis zur vollständigen Beseitigung des über dem Eisenspalt (4) befindlichen Teils der leitenden Schicht (7), wobei diese Beseitigung durch die plötzliche Veränderung des Widerstandes zwischen den zwei Magnetpolen (1, 2) erfaßt wird.

2. Verfahren gemäß Anspruch 1, in dem der Poliervorgang vom zylindrischen Typ ist.

3. Verfahren gemäß Anspruch 1, in dem der Poliervorgang vom ebenen Typ ist.

4. Verfahren gemäß Anspruch 2, in dem der Poliervorgang der aktiven Seite in bezug auf den Eisenspalt (4) symmetrisch ausgeführt wird.

5. Verfahren gemäß einem der Ansprüche 1 bis 4, in dem die Dicke der Schicht aus dielektrischem Material (8) wenigstens gleich der Dicke der Magnetpole (1, 2) ist.

6. Verfahren gemäß einem der Ansprüche 1 bis 5, in dem die leitende Schicht (7) aus Aluminium oder aus Chrom gebildet ist.

7. Verfahren gemäß einem der Ansprüche 1 bis 6, in dem die Schicht aus dielektrischem Material (8) Aluminiumoxid oder Siliziumoxid umfaßt.

## Claims

1. A process for detecting the completion of polishing of at least one thin film magnetic head, the head comprising, at the stage of use of the said process, an active face (3) constituted by two magnetic poles (1 and 2) separated by a head gap (4), the detection being produced by the interruption of an electrical circuit, said process comprising the following steps;
   – the deposition of a conducting layer (7) on the totality of the active faces (3) in order to constitute the said electrical circuit,
   – engraving of the active face covered by the said conducting layer,
   – the deposition of a dielectric material (8) on the said active engraved face,
   – the polishing of the active face starting with the free face of the layer of dielectric material (8) as far as complete elimination of the part of the conducting layer (7) positioned over the said head gap (4), said elimination being detected by the sudden variation in resistivity between the two magnetic poles (1 and 2).

2. The process as claimed in claim 1, wherein said polishing is of the cylindrical type.

3. The process as claimed in claim 1, wherein said polishing is of the planar type.

4. The process as claimed in claim 1, wherein said polishing of the active face is performed symmetrically in relation to the said head gap (4).

5. The process as claimed in any one of the preceding claims 1 through 4, wherein the thickness of the layer of dielectric material (8) is at least equal to the thickness of the magnetic poles (1 and 2).

6 The process as claimed in any one of the preceding claims 1 through 5, wherein the said conducting layer (7) is constituted by aluminum or by chromium.

7. The process as claimed in any one of the preceding claims 1 through 6, wherein the said layer of dielectric material (8) is constituted by alumina or silica.

# FIG.1

# FIG.2

EP 0 339 069 B1

# FIG.3

# FIG.4

7

# FIG.5

# FIG.6